(19) Europäisches Patentamt
European Patent Office
Office européen des brevets

(11) Veröffentlichungsnummer: **0 102 596**
**B1**

(12) **EUROPÄISCHE PATENTSCHRIFT**

(45) Veröffentlichungstag der Patentschrift: **11.05.88**

(51) Int. Cl.⁴: **C 08 G 18/32**, C 08 G 18/10, C 08 G 18/65, C 08 G 18/61, C 08 G 18/76

(21) Anmeldenummer: **83108408.2**

(22) Anmeldetag: **26.08.83**

(54) **Verfahren zur Herstellung von Polyurethan-Elastomeren unter Verwendung von Diolen der Dianhydro-hexit-Reihe in Verbindung mit Polyoxyalkylen-polydialkylsiloxan-Copolymeren.**

(30) Priorität: **07.09.82 DE 3233086**

(43) Veröffentlichungstag der Anmeldung: **14.03.84 Patentblatt 84/11**

(45) Bekanntmachung des Hinweises auf die Patenterteilung: **11.05.88 Patentblatt 88/19**

(84) Benannte Vertragsstaaten: **BE DE FR GB IT NL**

(56) Entgegenhaltungen:
**EP - A - 0 061 609**
**DE - A - 3 041 673**

(73) Patentinhaber: **BAYER AG, Konzernverwaltung RP Patentabteilung, D-5090 Leverkusen 1 Bayerwerk (DE)**

(72) Erfinder: **Barnes, Michael, Bechhausen 60, D-5632 Wermelskirchen 1 (DE)**
Erfinder: **Fassbender, Friedhelm, Bebelstrasse 10, D-5090 Leverkusen (DE)**

EP 0 102 596 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von massiven Polyurethan-Elastomeren, vorzugsweise nach dem Giessverfahren, aus Diisocyanaten, bevorzugt 1,5-Diisocyanato-naphthalin, und höhermolekularen Polyhydroxylverbindungen, bevorzugt in Form ihrer NCO-Prepolymeren, unter Verwendung von Diolen der Dianhydrohexit-Reihe als Kettenverlängerer in Verbindung mit bestimmten Polyoxyalkylen-polydialkylsiloxan-Copolymeren, bevorzugt Polyoxyalkylenpolydimethylsiloxan-Copolymeren, bevorzugt in Mengen von 0,1 bis 1,5 Gew.-%, wodurch eine erhebliche Verlängerung der Giesszeit ermöglicht wird.

Polyurethan-Giesssysteme mit langen Topfzeiten werden vom Markt gewünscht, weil sie z.B. die Herstellung von grossvolumigen Polyurethanteilen auch mit kleinen Maschinen erlauben und gleichzeitig aufgrund der langen Topfzeit zu blasenarmen Formteilen führen.

Formulierungen, die gergenüber normalen Diol-Isocyanatgemischen verlängerte Topfzeiten bringen, sind in der nicht vorveröffentlichten DE-A 31 11 093 (= EP-A 61609) beschrieben, bei denen als Diol-Kettenverlängerer 1.4–3.6-Dianhydrohexite als Diole eingesetzt werden. Durch eine solche Verwendung von Kettenverlängerern der Dianhydro-hexit-diol-Reihe lässt sich bereits die Topfzeit gegenüber Alkandiolen etwas verlängern, doch ist die Giesszeit dieser Systeme auf wenige Minuten beschränkt und noch verbesserungsbedürftig.

In DE-A 3 041 673 und 3 041 626 wird die Verwendung von Dianhydrohexiten als Starter und Vernetzer in der PU-Chemie allgemein erwähnt, ohne dass dort auf Giesselastomere oder die Mitverwendung von Polysiloxanen eingegangen wird.

Ein anderer Weg zur Verlängerung der Giesszeit in Diol-Kettenverlängerer enthaltenden PU-Giesssystemen ist der Zusatz von geringen Mengen an Säuren, doch ist der Effekt nicht immer ausreichend und die extrem langsame Verfestigung und auch die erhöhte Hydrolysenanfälligkeit der resultierenden Elastomere sind bekannte Nachteile.

Es wurde nun überraschenderweise gefunden, dass unter Erhaltung eines hervorragenden physikalischen Werteniveaus der Polyurethanelastomeren die Topfzeit (Giesszeit) beträchtlich (teilweise um das Drei- bis Vierfache) verlängert werden kann, wenn gleichzeitig mit den Dianhydrohexit-Kettenverlängerern bestimmte Polyoxyalkylen-polydialkylsiloxan-Copolymere (im folgenden kurz «Polyether-Silikone» genannt), wie sie zur Regulierung und Stabilisierung der Schaumstruktur von Polyurethanschaumstoffen allgemein üblich sind, zur Verwendung kommen. Dieser Befund ist umso überraschender, als trotz der deutlich verlängerten Topfzeiten eine einwandfreie Durchreaktion der Komponenten in praktisch wenig veränderter Zeit eintritt und keine Einbussen an physikalischen Eingenschaften an den Elastomeren beobachtet werden.

Damit gewinnen derartige Gemische aus Dianhydro-hexit-Verbindungen und Polyether-Silikonen eine grosse praktische Bedeutung, da sie die problemlose Herstellung von z.B. grossen Walzenbelägen, wie sie in vielen Industriezweigen heute aus Polyurethan hergestellt werden, ermöglichen. Dort, wo früher bei Verwendung stark unterschiedliche Formteilgewichte mehrere Polyurethan-Giessmaschinen unterschiedlicher Grösse eingesetzt werden mussten, kann man nun mit einer relativ kleinen Maschine Formteile mit sehr grossen Gewichtsunterschieden sicher herstellen.

Es ist zwar bekannt, Polyurethan-bildenden Systemen Silikone zuzusetzen, z.B. werden Elastomer-bildenden Systemen Dimethylpolysiloxane als Gleit- und Verlaufmittel zur Erzielung glatter Oberflächen zugesetzt, oder es werden Schaumstoff-bildenden Systemen Polyether-polysiloxan-Copolymerisate unterschiedlichen Aufbaus als Schaumstabilisatoren zugegeben (vgl. Ullmanns Encyclopädie der technischen Chemie, 4. Auflage, Band 19, Seite 306 – Verlag Chemie – Weinheim, 1981).

Es war jedoch unerwartet und im Effekt sehr überraschend, dass die 1.4–3.6-Dianhydro-hexite

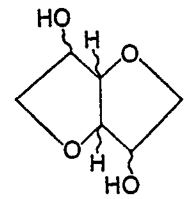
(I)

als Kettenverlängerer in Kombination mit von Polyoxyalkylen-polydialkylsiloxan-Copolymerisaten beim Elastomergiessverfahren mit NCO-Prepolymeren eine erhebliche Verlängerung der Giesszeit ergeben, ohne dass eine wesentliche Beeinflussung der Verfestigungszeit/Entformungszeit oder gar der Elastomereigenschaften eintritt.

Es ist dies umso überraschender, als dieser Effekt bei Kombinationen üblicher Alkylendiol-Kettenverlängerer (z.B. Butandiol-1,4 oder Butandiol-2,3) mit den Polyoxyalkylen-polydialkylsiloxan-Copolymerisaten überhaupt nicht eintritt.

Auch wird der Effekt bei den 1.4–3.6-Dianhydrohexiten nicht beobachtet, wenn man statt der Polyethersilikone Dimethylpolysiloxane (z.B. vom Typ der ®Baysilon-Öle-M der BAYER AG, 509 Leverkusen – siehe Firmenschrift AC 12 209 – Ausgabe vom 1. 2. 1980) oder auch Methylphenylpolysiloxane (z.B. vom Typ der ®Baysilon-Öle-P (BAYER AG, siehe Firmenschrift AC 12 023, Ausgabe 2/1980)), einsetzt.

Auch der Zusatz von organofunktionellen Dimethylpolysiloxanen, z.B. mit $CH_2$-OH-Endgruppen, wie sie nach Beispiel A-9 der DE-A 1 694 081 zugänglich sind, führt zu keiner Verbesserung.

Der unerwartete, technische doch sehr bedeutsame Effekt dürfte mit der speziellen Struktur der Dianhydro-hexitol-Kettenverlängerer zusammenhängen, welche eine eigenartige Wechselwirkung mit den Polyethersilikonen eingehen.

Gegenstand der Erfindung ist somit ein Verfahren zur Herstellung von massiven Polyurethan-Elastomeren durch Umsetzung von

a) 1,5-Diisocyanatonaphthalin oder überwiegend 1,5-Diisocyanatonaphthalin enthaltenden Gemischen aromatischer Diisocyanate,

b) mindestens zwei, gegenüber NCO-Gruppen reaktive Wasserstoffatome aufweisenden höhermolekularen Verbindungen der Molmasse 400 bis 10 000 oder NCO-Prepolymeren aus a) und b) und gegebenenfalls Anteilen von c),

c) Kettenverlängerungsmitteln oder Kettenverlängerungsmittelgemischen der Molmasse 62 bis 399, vorzugsweise 62 bis 250,

d) Silikonen und gegebenenfalls

e) Katalysatoren und anderen, an sich bekannten Zusatzstoffen,

dadurch gekennzeichnet, dass man

als Kettenverlängerungsmittel c) Diole der 1.4–3.6-Dianhydro-hexit-Reihe, gegebenenfalls in Abmischung mit weiteren niedermolekularen Kettenverlängerungsmitteln,

in Verbindung mit einem oder mehreren Polyoxyalkylen-polydialkylsiloxan-Copolymeren in Mengen von 0,05 bis 5 Gew.-%, vorzugsweise 0,1 bis 1,5 Gew.-%, bezogen auf das Polyurethan, einsetzt.

Die Herstellung der Polyurethan-Elastomeren erfolgt bevorzugt im Giessverfahren, einschliesslich Schleudergiessverfahren, oder Sprühverfahren aus Diisocyanaten a) und höhermolekularen Verbindungen b) und niedermolekularen Kettenverlängerungsmitteln c). Bevorzugt werden dabei als Zwischenstufe NCO-Prepolymere aus überschüssigen Mengen von Diisocyanaten a), höhermolekularen Verbindungen b) und gegebenenfalls Teilmengen der Diol-Kettenverlängerungsmittel c) hergestellt.

Bevorzugt werden die Diisocyanat- bzw. NCO-Prepolymerkomponente und die Polyol-Komponenten (in der Regel c), gegebenenfalls zusammen mit Anteilen der höhermolekularen Verbindung b)) jeweils separat dosiert einer wirksamen Mischvorrichtung zugeführt und anschliessend vergossen, ausgeschleudert, in Formen gefüllt oder versprüht. Bei hinreichender Verarbeitungszeit («Topfzeit oder Giesszeit») kann noch eine Verrührung der Komponenten von Hand erfolgen; zumeist bedient man sich jedoch maschineller Dosier-, Misch- und Austragsvorrichtungen, bevorzugt in kontinuierlicher Form.

Für die Durchführung des erfindungsgemässen Verfahrens werden als Komponente a) 1,5-Diisocyanato-naphthalin oder mindestens 50 Mol.-% 1,5-Diisocyanatonaphthalin beinhaltende Gemische aromatischer Diisocyanate eingesetzt, beispielsweise mit 1,3- und 1,4-Phenylendiisocyanat, 2,4- und/oder 2,6-Toluylendiisocyanat, Diphenylmethan-2,4- und/oder -4,4'-diisocyanat oder 3,3'-Dimethyl-4,4'-diisocyanatodiphenyl oder mit beliebigen Gemischen dieser Isocyanate.

Als höhermolekulare Ausgangskomponenten b) mit mindestens zwei gegenüber Isocyanaten reaktionsfähigen Wasserstoffatomen und einer Molmasse in der Regel von 400 bis 10 000 versteht man neben Aminogruppen, Thiolgruppen oder Carboxylgruppen aufweisenden Verbindungen vorzugsweise Hydroxylgruppen aufweisende Verbindungen, insbesondere mit 2 bis 4 Hydroxylgruppen, speziell solche vom Molgewicht 800 bis 10 000, besonders bevorzugt 1000 bis 6000. Dies sind z.B. mindestens zwei, vorzugsweise aber 2 bis 3, ganz besonders bevorzugt etwa zwei Hydroxylgruppen aufweisende Polyester, Polycarbonate, Polylactone, Polyesteramide, Polyether und Polythioether, wie sie für die Herstellung von Polyurethanelastomeren an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich drei- und vierwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Polycarbonsäuren und deren Derivate seien genannt: Adipinsäure, Sebacinsäure, Phthalsäure, Phthalsäureanhydrid, Tetrahydro- oder Hexahydrophthalsäureanhydrid, Isophthalsäure, Trimellitsäure, Maleinsäureanhydrid, di- und trimerisierte ungesättigte Fettsäure, Terephthalsäuredimethylester und Terephthalsäure-bis-glykolester. Bevorzugt sind Polyester auf Adipinsäurebasis.

Als mehrwertige Alkohole kommen z.B. Ethylenglykol, Propandiol-1,2 oder -1,3, Butandiol-1,4 und/oder -2,3 und/oder -1,3, Hexandiol-1,6, Neopentylglykol, 1,4-Bis-hydroxy-methylcyclohexan, 2-Methyl-1,3-propandiol, Hydrochinon-bis-(2-hydroxyethyl)-ether, Resorcin-bis-(2-hydroxyethyl)-ether, Trimethylolpropan, Hexantriol-1,2,6, pentaerythrit, Chinit, Mannit und Sorbit, Formit, Methylglykosid, ferner Di-, Tri-, Tetra- und höhere Poly-ethylen-, Poly-propylen-, sowie Poly-butylen-Glykole in Frage.

Die Polyester können anteilig endständige Carboxylgruppen aufweisen. Auch Polyester aus Lactonen, z.B. ε-Caprolacton, oder Hydroxycarbonsäuren, z.B. ε-Hydroxycapronsäure, sind einsetzbar.

Auch die erfindungsgemäss in Frage kommenden, mindestens 2, vorzugsweise 2 bis 3, besonders bevorzugt etwa 2 Hydroxylgruppen aufweisenden Polyether sind solche der an sich bekannten Art und werden z.B. durch Polymerisation von Tetrahydrofuran und/oder Epoxiden wie Ethylenoxid, Propylenoxid, Butylenoxid, Styroloxid oder Epichlorhydrin mit sich selbst, z.B. in Gegenwart von Lewis-Katalysatoren, oder durch Anlagerung dieser Epoxide, vorzugsweise Ethylenoxid und Propylenoxid, gegebenenfalls im Gemisch oder

nacheinander, an Startkomponenten mit reaktionsfähigen Wasserstoffatomen wie Wasser, Alkohole, Ammoniak oder Amine, z. B. Ethylenglykol. Propylenglykol, Diethylenglykol, Dimethylolpropan, Glycerin, Sorbit, Sucrose, Formit oder Formose, sowie 4,4'-Dihydroxy-diphenylpropan, Anilin, Ethylendiamin oder Ethanolamin hergestellt.

Erfindungsgemäss können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen wie Hydrazin oder Diaminen), bzw. Polykondensationsreaktionen (z. B. zwischen Formaldehyd und Phenolen und/oder Aminen) in situ in den obengenannten, Hydroxylgruppen aufweisenden Verbindungen ablaufen lässt.

Auch die durch Vinylpolymerisate modifizierten Polyhydroxylverbindungen, wie sie z. B. durch Polymerisation von Styrol und/oder Acrylnitril in Gegenwart von Polyethern oder Polycarbonatpolyolen erhalten werden, sind für das erfindungsgemässe Verfahren geeignet.

Vertreter der genannten, erfindungsgemäss zu verwendenden höhermolekularen Polyhydroxylverbindungen sind z. B. in High Polymers, Vol. XVI, «Polyurethanes, Chemistry and Technology», verfasst von Saunders-Frisch, Interscience Publishers, New York, London, Band I, 1962, Seiten 32 bis 42 und Seiten 44 bis 54 und Band II, 1964, Seiten 5 bis 6 und 198 bis 199, ferner im Kunststoff-Handbuch Band VII, Vieweg-Höchtlen, Carl-Hanser-Verlag, München 1966, z. B. auf den Seiten 45 bis 71, sowie besonders in der DE-A 2 920 501, Seite 17 bis Seite 24 aufgeführt. Selbstverständlich können auch Mischungen, z. B. von Polyethern und Polyestern, eingesetzt werden.

Als Kettenverlängerungsmittel c) werden im erfindungsgemässen Verfahren Verbindungen aus der Reihe der 1.4–3.6-Dianhydro-hexite der allgemeinen Formel (I)

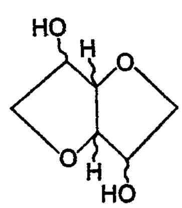

(I)

eingesetzt, z. B. 1,4–3,6-Dianhydro-sorbit (II), -mannit (III) und/oder -idit (IV)

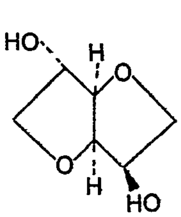 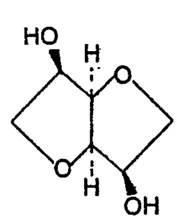 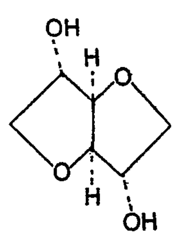

(II) (III) (IV)

Als erfindungsgemäss zu verwendende Kettenverlängerer können selbstverständlich auch Abmischungen der Dianhydrohexite miteinander in beliebigen Mischungsverhältnissen oder flüssige Isomerengemische dienen, wie sie durch Isomerisierung von (Di)acylverbindungen der Hexite mit starken Säuren bei Temperaturen oberhalb 140 °C und anschliessende Abspaltung der Acylgruppen nach einem eigenen, bisher unveröffentlichten Verfahren erhalten werden. Auch Mischungen der Bisanhydro-hexite mit anderen, 2 bis 3, vorzugsweise etwa 2 gegenüber Isocyanaten reaktionsfähige Wasserstoffatome enthaltenden Verbindungen der Molmasse 32 bis 399 können verwendet werden, vorzugsweise Mischungen mit Di- und/oder Triolen und/oder (reaktionsträgen) aromatischen Diaminen.

Als Beispiele für derartige, Hydroxylgruppen und/oder aromatische Aminogruppen enthaltende Kettenverlängerer seien genannt: niedermolekulare Polyole, vorzugsweise Diole, der Molmasse 62 bis 399, vorzugsweise 62 bis 250, wie Ethylenglykol, Propandiol-1,2 und/oder -1,3, Butandiol-1,4 und -2,3, Pentandiol-1,5, Hexandiol-1,6, Octandiol-1,8, Neopentylglykol, 1,4-Bis-hydroxymethylcyclohexan, Chinit, 2-Methyl-1,3-propandiol, Dibrombutendiol, ferner Ricinusöl, Di-, Tri-, Tetra- und höhere Polyethylenglykole mit einer Molmasse bis 399, Di-, Tri-, Tetra- und höhere Polypropylenglykole mit einer Molmasse bis 399, Di-, Tri-, Tetra- und höhere Polybutylenglykole mit einer Molmasse bis 399, 4,4'-Dihydroxy-dicyclohexylpropan, Di-hydroxyethyl-hydrochinon, N-Methyldiethanolamin, oder in untergeordneten Mengen neben den Diolen auch Triole wie Trimethylolpropan, Hexantriol-1,2,6, Trimethylolethan, Pentaerythrit oder Triethanolamin.

Besonders bevorzugt sind 1,4-Butandiol und/oder 2,3-Butandiol als zusätzliche Kettenverlängerungsmittel in Mengen unter 50 Mol-% der gesamten Kettenverlängerungsmittelkomponente.

Als Beispiele für aromatische Diamine als Kettenverlängerungsmittel seien 3,3'-Dichlor-4,4'-diamino-diphenylmethan, 2,4- und/oder 2,6-Diamino-3,5-dialkyltoluylendiamine (Alkyl vorzugsweise Ethyl), 2,4-Diaminobenzoesäureester gemäss DE-A 2 025 900, estergruppenhaltige Diamine, gegebenenfalls in 5-Stellung substituierte 2-Halogen-1,3-phenylendiamine, 2,4'-Diaminodiphenylsulfid, sowie Bisanthranilsäureester gemäss DE-A 2 040 644 und 2 160 590, sowie die in der DE-A 2 635 400 aufgeführten relativ hochschmelzenden Diamine genannt.

Als weitere, erfindungsgemäss geeignete, niedermolekulare Co-Kettenverlängerungsmittel c) seien z. B. Esterdiole wie ε-Hydroxybutyl-ε-hydroxy-capronsäureester, ω-Hydroxyhexyl-γ-hydroxybuttersäureester, Adipinsäure-bis-(β-hydroxyethyl)-ester und Terephthalsäure-bis(β-hydroxyethyl)ester; Diolurethane, z. B. 1,6-Hexamethylen-bis-(β-hydroxyethylurethan) oder 4,4'-Diphenylmethan-bis-(ε-hydroxybutylurethan); sowie Diolharnstoffe, z. B. 4,4'-Diphenylmethan-bis-(β-hydroxyethylharnstoff), genannt.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoalkohole wie Butanol, 2-Ethylhexanol, Octanol, Dodecanol, die verschiedenen Amylalkohole, Cyclohexanol, Ethylenglykolmonoethylether oder Diisopropylcarbinol.

Bevorzugt sind Abmischungen der 1.4–3.6-Dianhydrohexite mit niedermolekularen aromatischen Diaminen, besonders aber mit Diolen mit aliphatisch gebundenen OH-Gruppen. Unter den niedermolekularen Diolen sind, wie schon erwähnt, 1,4-Butandiol und 2,3-Butandiol besonders bevorzugt.

Die erfindungsgemäss zur Anwendung kommenden «Polyether-Silicone» stellen lineare, bevorzugt aber verzweigte oder kammartig aufgebaute Polyoxyalkylen-poly(di)alkylsiloxan-Copolymere, vorzugsweise Polyoxyalkylen-dimethylsiloxan-Copolymere dar, die im Molekül sowohl einen hydrophilen (Polyether-) wie hydrophoben (Siloxan-) Teil enthalten. Der Polyoxyalkylenetheranteil beträgt dabei insbesondere 20 bis 90 Gew.-%, vorzugsweise 40 bis 87,5 Gew.-%, entsprechend der Silikonanteil 80 bis 10, bevorzugt 60 bis 12,5 Gew.-%.

Der Polyoxyalkylenether-Teil enthält insbesondere mindestens 20 bis 80 Gew.-%, vorzugsweise 40 bis 70 Gew.-% an Oxyethylengruppen; die anderen Oxyalkylenreste können aus Oxyalkylengruppen mit 3 bis 10 C-Atomen, vorzugsweise Oxypropylen- oder Oxybutylenresten bestehen; ganz besonders bevorzugter Rest ist jedoch der Oxypropylenrest

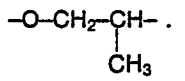

Die Kettenlänge der Polyoxyalkylensegmente im Polyether-Silikon liegt bevorzugt bei jeweils einer Molmasse ≥400 pro Polyoxyalkylenkette. Die Oxyalkylensegmente können rein segmentartig aus Oxyethylen- und Oxypropylensegmenten aufgebaut sein oder können (weniger bevorzugt) kürzere Mischsegmente darstellen. Die Enden einer Polyetherkette können durch einen monofunktionellen Rest, z.B. den Butoxyrest oder Methoxyethoxyrest, verschlossen sein.

Der Poly(di)alkylsiloxan-Teil der «Polyether-Silikone» kann aus z.B. (Di)methyl-siloxan-, (Di) ethylsiloxan-, (Di)amylsiloxan- und anderen (Di)alkylsiloxanresten bestehen, bevorzugt sind Poly(di)methylsiloxanreste als überwiegende Glieder der Siloxankette.

Ein Teil der Dialkylsiloxanreste kann durch

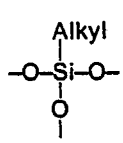

ersetzt werden, z.B. bei den (bevorzugten) trifunktionellen Silikonresten durch einen

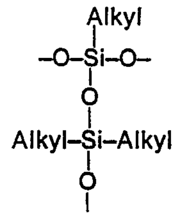

–Rest,

oder bei organofunktionellen Resten durch einen

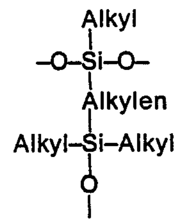

–Rest,

oder auch einen

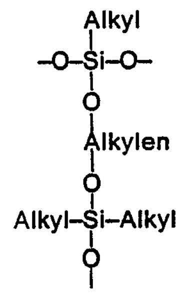

–Rest.

Derartige verzweigende oder modifizierende (z.B. organofunktionelle Verknüpfungen ergebende) Reste sind in der Silikonchemie üblich, ebenso sind die Endgruppen zumeist die

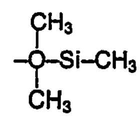

–Gruppe.

Die mögliche Anwesenheit solcher modifizierender Gruppen wird durch die Formulierung «(Di)alkylsiloxan»-Gruppe angedeutet.

Entsprechende Aufbaureaktionen zur Herstellung solcher Polyethersilikone werden in dem Buch: Chemie und Technik der Silikone, W. Noll, Verlag Chemie, Weinheim, 2. Auflage, 1968, Seite 321–323 beschrieben. Beispielhaft genannt seien kammartig mit Polyethersegmenten modifizierte Polyethersilikone (V) und endständig mit Polyethersegmenten modifizierte Polyethersilikone verzweigter Struktur (VI):

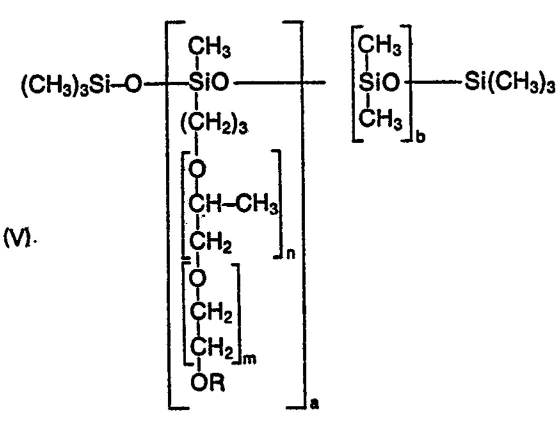

(V).

(wobei a) und b) ganze Zahlen darstellen und n und m ganze Zahlen darstellen, so dass der Anteil der Oxyalkylenethersegmente 20 bis 90 Gew.-% beträgt);

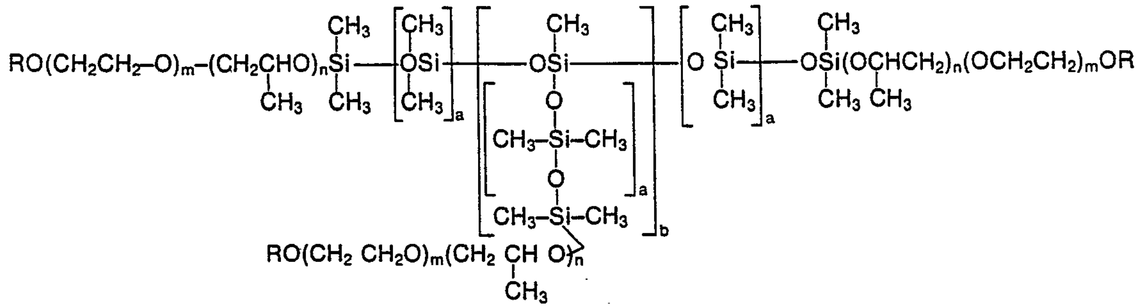

wobei a) und b) sowie m) und n) ganze Zahlen darstellen und solchen Werten entsprechen, dass (im Mittel) die angegebenen Oxyalkylenether- und Dimethylsiloxan-Gehalte erreicht werden und die Anteile der Oxyethylenethersegmente im angegebenen Bereich liegen.

Polyethersilikone dieser Art werden in der Firmenschrift «Goldschmidt informiert», Nr. 24 (3/1973) der Fa. Goldschmidt-AG-Essen auf Seite 3 angegeben, wo auch Literatur zur Herstellung solcher Polyethersilikone und bezüglich deren Eigenschaften zitiert ist.

Die Herstellung und die Strukturen solcher Polyethersiloxancopolymerer werden beispielsweise auch in folgenden Patentschriften beschrieben: DE-A 1 444 316 (US-A 3 562 786), DE-A 1 040 251 (US-A 2 834 748), DE-A 1 233 133, US-A 2 917 480, US-A 3 629 308, GB-A 1 006 784, DE-A 1 545 110 und EP-A 25822.

Die Molekulargewichte der Polyethersilikone liegen im allgemeinen zwischen 3000 und 50 000, vorzugsweise zwischen 6000 und 20 000.

Als gegebenenfalls zu verwendende Hilfs- und Zusatzmittel e) kommen z. B. Katalysatoren für die Reaktion zwischen Hydroxyl- und Isocyanatgruppen in Betracht, vorzugsweise solche der in der Polyurethanchemie an sich bekannten Art, z. B. tertiäre Amine, wie Triethylamin, N-Tetra-methylethylendiamin, 1,4-Diaza-bicyclo-(2,2,2)-octan, N,N-Dimethylbenzylamin, N-Methyl-N'-dimethylamino-ethylpiperazin, Pentamethyldiethylentriamin, oder auch als Katalysatoren bekannte Mannichbasen aus sekundären Aminen, wie Dimethylamin und Aldehyden (Formaldehyd) oder Ketonen (Aceton) und Phenolen, ferner Silaamine mit Kohlenstoff-Silicium-Bindungen, z. B. 2,2,4-Trimethyl-2-silamorpholin und 1,3-Diethylaminomethyltetramethyldisiloxan. Es können auch organische Metallverbindungen, insbesondere organische Zinnverbindungen, als Katalysatoren verwendet werden, z. B. Zinn-(II)-acetat, Zinn-(II)-ethylhexoat und die Zinn-(IV)-Verbindungen, z. B. Dibutylzinndichlorid, Dibutylzinndilaurat und Dibutylzinnmaleat. Weitere geeignete Katalysatoren sind in der DE-A 2 920 501 auf den Seiten 29, Zeile 5 bis Seite 31, Zeile 25 beschrieben.

Die Katalysatoren werden vorzugsweise in einer Menge zwischen 0,001 und 10 Gew.-%, bezogen auf das Gesamtgewicht von b), c), d), eingesetzt. Selbstverständlich können alle Katalysatoren als Gemische eingesetzt werden. Besonders geeignete Katalysatoren sind Zinn-II-Carbonsäuresalze, Triethylendiamin und Titansäureester.

Weitere Hilfs- und Zusatzmittel sind Reaktionsverzögerer, z. B. sauer reagierende Stoffe wie Salzsäure oder organische Säurehalogenide, sowie Pigmente oder Farbstoffe und Flammschutzmittel der an sich bekannten Art, z. B. Tris-chlorethylenphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide.

Beispiele von gegebenenfalls erfindungsgemäss mitzuverwendenden flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113, sowie in der DE-A 2 920 501 beschrieben.

Das erfindungsgemässe Verfahren wird im allgemeinen wie folgt durchgeführt:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-A 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z. B. auf den Seiten 121 bis 247 beschrieben.

Die Mengen an Reaktionskomponenten werden im erfindungsgemässen Verfahren in der Regel so gewählt, dass das Molverhältnis von Polyisocyanaten zu Kettenverlängerer plus weitere Verbindungen mit reaktionsfähigen OH-Gruppen – abhängig vom jeweils angewendeten Verarbeitungsverfahren – in der Regel zwischen 0,9 und 1,5

liegt, vorzugsweise zwischen 1,05 und 1,25. Der Prozentgehalt an NCO im Prepolymer, falls über die Prepolymerstufe gearbeitet wird, kann 1 bis 16, vorzugsweise 3 bis 12 Gew.-% betragen. Das Molverhältnis von reaktionsfähigem Wasserstoff des Kettenverlängerers zu reaktionsfähigen OH-Gruppen in dem höhermolekularen Polyol kann in weiten Grenzen variieren, z.B. 0,1 bis 6, vorzugsweise soll es zwischen 0,4 und 4,0 liegen, wobei weiche bis harte Polyurethan-Typen resultieren.

Bevorzugte Prepolymere sind solche mit einem NCO-Gehalt zwischen 1 und 16 Gew.-% NCO auf der Basis von Polyestern, gegebenenfalls 0,1 bis 6 Mol an niedermolekularen Diolen, bezogen auf 1 Mol Polyester, und 1,5-Diisocyanatonaphthalin.

Eine weitere Ausführungsform besteht darin, dass man die höhermolekulare Verbindung mit mindestens zwei Hydroxylgruppen im Gemisch mit dem Kettenverlängerungsmittel mit einer äquivalenten Menge oder einem geringen Überschuss an Diisocyanat umsetzt und das Reaktionsprodukt nach der Granulierung in der Hitze unter Druck verformt. Je nach den angewendeten Mengenverhältnissen der Reaktionsteilnehmer können hierbei Polyurethankunststoffe mit verschiedenartigen Härten, verschiedenartiger Elastizität und gegebenenfalls vernetzter Struktur erhalten werden. Man kann auf diese Weise auch Kunststoffe herstellen, die sich wie Thermoplaste verarbeiten lassen. Eine weitere Ausführungsform besteht darin, dass man die höhermolekulare Verbindung mit mindestens 2 Hydroxylgruppen im Gemisch mit dem erfindungsgemäss zu verwendenden Kettenverlängerungsmittel mit einem Unterschuss an Diisocyanat umsetzt, wobei ein walzbares Fell erhalten wird, das anschliessend, z.B. durch Vernetzung mit weiterem Diisocyanat, in einen kautschukelastischen Polyurethankunststoff übergeführt werden kann.

Die Polyethersilikone können in verschiedenen Stadien der Polyurethansynthese eingesetzt werden. Beispielsweise können die Polyethersilikone den Dianhydrohexiten oder den Dianhydrohexithaltigen Kettenverlängerungsgemischen zugemischt werden, so dass eine Zubereitung aus Polyethersilikon und dem erfindungsgemäss zu verwendenden Kettenverlängerungsmittel entsteht.

Die Polyethersilikone können jedoch auch den NCO-Prepolymeren in der angegebenen Menge zugemischt werden, wodurch eine Silikonetherhaltige NCO-Prepolymer-Zubereitung entsteht. Weniger bevorzugt ist eine Zubereitung aus Polyethersilikonen und höhermolekularen Polyhydroxylverbindungen wie Polyestern oder Polyethern. Da manche der Polyethersilikone noch einen gewissen Katalysatorgehalt (Alkaligehalt) aufweisen, ist die Zugabe vor der NCO-Prepolymerbildung weniger bevorzugt.

Die Zubereitungen mit Kettenverlängerungsmitteln und/oder NCO-Prepolymeren können bevorzugt zur Elastomersynthese herangezogen werden.

Erfindungsgemäss hergestellte Elastomere finden vielseitige Anwendung, z.B. für mechanisch, thermisch oder chemisch stark beanspruchte Formkörper, wie Rollen, Keilriemen oder Dichtungen, für Heisswasserrohre oder Motoren oder zur Herstellung von Folien, Textilbeschichtungen und Polyurethanpulvern.

Die folgenden Beispiele erläutern das erfindungsgemässe Verfahren. Wo nicht anders vermerkt, sind Zahlenwerte als Gewichtsteile bzw. Gewichtsprozente zu verstehen.

Beispiel 1
(Vergleich ohne Silikonzusatz)

250 Teile eines aus Adipinsäure, Butandiol-1,4 und Ethylenglykol (1:1) bestehenden Polyesters mit einer mittleren Molmasse von 2000 werden bei 130 °C und einem Vakuum von ca. 40 mbar entwässert und anschliessend bei 140 °C gehalten.

Dann gibt man 100 Teile 1,5-Diisocyanatonaphthalin zu. Nach Beendigung der exothermen Reaktion werden zu dem NCO-Prepolymer unter starkem Rühren bei ca. 130 °C 42,5 Teile aufgeschmolzenes 1.4–3.6-Bisanhydro-sorbit gegeben. Es wird 60 Sekunden gerührt und dann in eine auf 110 °C vorgeheizte Form gegossen. Die Mischung ist ca. 7 Minuten giessfähig und erstarrt nach ca. 25 Minuten. Es wird noch 24 Stunden bei 110 °C getempert.

Das fertige Elastomer hat die in Tabelle 1 angegebenen Eigenschaften.

Der 1.4–3.6-Dianhydrosorbit wird wie folgt hergestellt:

364 Teile D-Sorbit werden mit 20 Teilen Eisessig bei 45 °C 40 Stunden mit 40 bar Chlorwasserstoff in einem Druckgefäss beaufschlagt. Anschliessend wird das Reaktionsgemisch fraktioniert. Nachdem Wasser und Essigsäure bei Normaldruck abdestilliert sind, gewinnt man bei 165 bis 175 °C/17 bis 18 bar 247 Teile (84,5% der Theorie) an 1.4–3.6-Dianhydro-sorbit als Öl, das alsbald kristallisiert und einen Schmelzpunkt von 54,5 bis 55,5 °C aufweist.

Beispiel 2
(erfindungsgemäss: NCO-Prepolymer + Polyether-Silikon)

Analog Beispiel 1 werden 250 Teile des Polyesters aus Beispiel 1 entwässert und mit 100 Teilen 1,5-Diisocyanatonaphthalin prepolymerisiert.

Man rührt 0,88 Teile eines handelsüblichen Schaumstabilisators (Polyether-Silikon-OS-25; BAYER AG, D-5090 Leverkusen) in das NCO-Prepolymer ein. Das Polyethersilikon OS-25 ist ein Dimethylsiloxanpolyethercopolymer mit 44 Gew.-% Oxyethylengruppen im Polyetherteil, einer Viskosität von 850 $\pm$ 200 mPa.s, einer Dichte von 1,03 g/cm$^3$ und einem pH-Wert von 10.

In das Polyethersilikon-haltige NCO-Prepolymer rührt man anschliessend 42,5 Teile aufgeschmolzenes 1.4-3.6-Dianhydro-sorbit als Kettenverlängerungsmittel unter intensivem Rühren ein.

Nach 60 Sekunden wird diese Mischung in eine auf 110 °C vorgeheizte Form gegossen. Die Mischung bleibt ca. 30 Minuten (!) giessfähig und erstarrt nach 50 Minuten. Die lange Giesszeit trotz alkalischer Reaktion des Polyethersilikons ist überraschend.

Nach 24stündigem Tempern bei 110 °C erhält man ein Elastomer mit Eigenschaften, wie sie in Tabelle 1 wiedergegeben sind.

Gegenüber Beispiel 1 ist die Giesszeit etwa viermal so lange und die Elastomereigenschaften sind bei erfindungsgemässer Mitverwendung des Polyethersilikons sogar verbessert.

Beispiel 3
(erfindungsgemäss; Dianhydrosorbit + Polyethersilikon)

Analog Beispiel 1 werden 250 Teile des Polyesters (siehe Beispiel 1) entwässert unt mit 100 Teilen 1,5-Diisocyanatonaphthalin prepolymerisiert.

Man rührt 42,5 Teile aufgeschmolzenes 1.4–3.6-Dianhydrosorbit mit 0,88 Teilen des in Beispiel 2 benutzten Polyethersilikons intensiv bis zur Homogenisierung. Das Gemisch wird mit dem NCO-Prepolymer vermischt und nach 60 Sekunden in eine auf 110 °C vorgeheizte Form gegossen. Die Elastomergiessmischung bleibt ca. 25 Minuten giessfähig und erstarrt nach ca. 45 Minuten.

Nach 24stündigem Tempern bei 110 °C erhält man ein Elastomer mit den in Tabelle 1 wiedergegebenen Eigenschaften.

Gegenüber Vergleichsbeispiel 1 ist die Giesszeit etwa viermal so lange. Auch die Elastomereigenschaften sind zumindest unverändert (leicht verbessert) gegenüber dem Vergleichsbeispiel 1.

Beispiel 4
(Vergleichsbeispiel – Reaktionsverzögerung durch Säurezusatz nach Stand der Technik)

Analog Beispiel 1 bis 3 werden 250 Teile des Polyesters von Beispiel 1 entwässert und mit 0,001250 Teilen Weinsäure als Verzögerer versetzt und anschliessend mit 100 Teilen 1,5-Diisocyanatonaphthalin in das NCO-Prepolymer bei 140 °C überführt.

Man rührt 42,5 Teile aufgeschmolzenes 1.4–3.6-Bisanhydrosorbit intensiv ein. Es wird 60 Sekunden lang gerührt und dann in die auf 110 °C vorgeheizte Form gegossen. Die Mischung ist in ca. 35 Minuten giessfähig, erstarrt jedoch erst nach mehr als 90 Minuten. Das Elastomer wird in der Form bei 110 °C getempert und zeigt die in Tabelle 1 angegebenen Eigenschaften.

Hier wird zwar auch eine Verlängerung der Giesszeit gegenüber Beispiel 1 erzielt; die Verfestigung ist jedoch wesentlich langsamer als in den Beispielen 2 und 3.

Beispiel 5

Analog Beispiel 3 werden 0,88 g eines anderen handelsüblichen Polyethersilikon-Schaumstabilisators (OS-15; BAYER AG, D-5090 Leverkusen) eingesetzt, wobei die Kenndaten des Copolyethers aus Ethylenoxid und Propylenoxid mit Dimethylsiloxangruppen wie folgt sind:

Viskosität 450 + 150 mPa.s,
Dichte 1,026 g/$cm^3$.

Die elastomerbildende Mischung bleibt ca. 25 Minuten giessfähig und erstarrt nach ca. 45 Minuten.

Nach 24stündigem Tempern bei 110 °C erhält man ein Elastomer mit den in Tabelle 1 angegebenen Eigenschaften.

Beispiel 6

Analog Beispiel 3 werden 0,88 Teile eines anderen Schaumstabilisators (Stabilisator OS-20; BAYER AG, D-5090 Leverkusen) eingesetzt. Das Polyether-Silikon besteht in seinen Polyetherteilen aus Ethylenoxid und Propylenoxid und im Silikonanteil überwiegend aus Dimethylsiloxangruppen neben Monomethyl-Siloxan-Verzweigungsgruppen, wobei der Silikongehalt 5,9% beträgt. Die Viskosität des Polyethersilikons ist 700 mPa.s, die Dichte 1,03 g/$cm^3$.

Die Mischung bleibt ca. 25 Minuten giessfähig und erstarrt nach 45 Minuten. Nach 24stündigem Tempern bei 110 °C erhält man ein Elastomer mit folgenden Eigenschaften (vgl. Tabelle 1).

Beispiel 7

Analog Beispiel 3 werden 0,88 Teile eines vierten Polyethersilikons (Schaumstabilisator OS-50, BAYER AG, D-5090 Leverkusen) eingesetzt. Der Stabilisator hat einen Siliciumgehalt von 6,8%, einen verzweigten Aufbau aus im wesentlichen Dimethylpolysiloxanresten neben Monomethylsiloxanresten und einen Gehalt von knapp 50% Ethylenoxid im Polyetherteil. Die Viskosität beträgt 750 mPa.s, die Dichte 1,029 g/$cm^3$, der pH-Wert ca. 10,0.

Beispiel 8 (Vergleichsbeispiel)

Analog Beispiel 3 wird ein stickstoffhaltiges Polyethersiloxan (Stabilisator OS-710; BAYER AG, D-5090 Leverkusen) eingesetzt. Dieses stickstoffhaltige Polyethersiloxan ist nicht erfindungsgemäss wirksam. Die Mischung bleibt nur 5 Minuten giessfähig. Elastomereigenschaften nach üblicher Temperung vgl. Tab. 1.

Beispiel 9
(nicht erfindungsgemäss; Vergleichsversuch mit reinem Polydimethylsiloxan)

Analog Beispiel 3 werden 0,80 Teile eines handelsüblichen Polydimethylsiloxans (Baysilon ®M 100, BAYER AG, D-5090 Leverkusen – vgl. Firmenschrift Baysilone – Öle -M «polymere Dimethylpolysiloxane», BAYER AG, Sparte AC – Bestellnummer AC 12209 vom 1. 2 1980) eingesetzt. Die Mischung ist nur ca. 4,75 Minuten giessfähig. Nach 24stündigem Tempern bei 110 °C erhält man ein normal aussehendes Elastomer.

Normale Polydimethylsiloxane ohne Oxyalkylensequenzen im Silikon bewirken keine Reaktionsverzögerungen im Giessprozess.

Beispiel 10
(Vergleichsbeispiel)

Analog Beispiel 3 werden 0,80 Teile eines handelsüblichen Poly-methylphenylsiloxans (PN-200; vgl. Firmenschrift Baysilone-Öle-P «polymere Methylphenylsiloxane», BAYER AG, Sparte AC, Bestellnummer AC/12023 – Ausgabe 2/80) eingesetzt. Die Mischung bleibt ca. 4 Minuten giessfähig

und erstarrt nach ca. 15 Minuten. Nach 24 stündigem Tempern bei 110 °C erhält man ein normal aussehendes Elastomer.

Ein Poly-methyl/phenylsiloxan ohne Oxyalkylengruppen im Silikon vermag keine Reaktionsverzögerung im Giessverfahren hervorzurufen.

Beispiel 11
(Vergleichsversuch)

Analog Beispiel 3 werden 0,80 Teile eines handelsüblichen Polymethylphenylsiloxans (Baysilon®-PH-300 – vgl. Baysilone-Öle-P («polymere Methylphenyl-siloxane») Firmenschrift BAYER AG, Sparte AC; Bestellnummer AC/12023 Ausgabe 2/80) eingesetzt. Die Mischung bleibt nur ca. 4,5 Minuten giessfähig und erstarrt nach ca. 17 Minuten. Nach 24stündigem Tempern bei 110 °C erhält man ein normal aussehendes Elastomer. Auch dieses Silikonöl vermag nicht die erfindungsgemässe Wirkung von Polyethersilikonen hervorzubringen.

Beispiel 12
(nicht erfindungsgemäss; einbaufähiges organofunktionelles Silikon)

Analog Beispiel 3 werden 0,88 Teile eines handelsüblichen linearen Polydimethylsiloxans mit endständigen primären Hydroxyalkylgruppen (OH-Gehalt ca. 6%; ®Baysilon-OF-OH 502 der BAYER AG, D-5090 Leverkusen) eingesetzt. Die Mischung bleibt ca. 5,8 Minuten giessfähig und erstarrt nach 25 Minuten. Nach 24stündigem Tempern bei 110 °C erhält man ein normal aussehendes Elastomer.

Beispiel 13
(Vergleich: Standard-Diolkettenverlängerer ohne Silikon-Stabilisator)

Analog Beispiel 1 werden 250 Teile des dort beschriebenen Polyesters entwässert und mit 100 Teilen 1,5-Diisocyanatonaphthalin prepolymerisiert. Man rührt 26,5 Teile Butan-2,3-diol intensiv ein. Nach ca. 60 Sekunden wird diese Mischung in eine auf 110 °C vorgeheizte Form gegossen. Sie bleibt ca. 2,5 Minuten giessfähig und erstarrt in ca. 12 Minuten. Nach 24stündigem Tempern bei 110 °C erhält man ein Elastomer mit den in Tabelle 1 angegebenen Eigenschaften.

Versucht man bei der hohen NCO-«Härte» des NCO-Prepolymers eine Kettenverlängerung mit Butan-1,4-diol als Kettenverlängerungsmittel, so hat die Mischung eine zu kurze Giesszeit, um gute Elastomere in den benutzten Formen herzustellen.

Beispiel 14
(Vergleich: Standarddiol-Kettenverlängerer mit Polyethersilikon-Stabilisator)

Analog Beispiel 1 werden 250 Teile eines Polyesters nach Beispiel 1 entwässert und mit 100 Teilen 1,5-Diisocyanatonaphthalin prepolymerisiert. In das Prepolymer rührt man 0,88 Teile des Polyethersilikons OS-25 (BAYER AG) ein und danach unter sehr intensivem Rühren 26,5 Teile Butan-2,3-diol, entsprechend Vergleichsbeispiel 13. Nach ca. 60 Sekunden wird diese Mischung in eine auf 110 °C vorgeheizte Form gegossen. Sie bleibt ca. 2,5 Minuten giessfähig und erstarrt nach ca. 13 Minuten. Nach 24stündigem Tempern bei 110 °C erhält man ein Elastomer mit folgenden Eigenschaften (vgl. Tabelle).

Bei 2,3-Butandiol als Kettenverlängerungsmittel wird keinerlei Verlängerung der Giesszeit durch den Polyethersilikon-Zusatz erzielt, auch keine Verbesserung der Elastomereigenschaften.

Tabelle 1

| | Dimension | Prüfmethode | Eigenschaften der Elastomere Beispiel-Nr. 1 (V) | 2 | 3 | 4 (V) | 5 | 6 | 7 |
|---|---|---|---|---|---|---|---|---|---|
| Shore Härte A/D | | (DIN 53505) | 97/51 | 96/51 | 96/50 | 96/49 | 96/50 | 96/50 | 95/51 |
| σ 100% (Spannung bei 100% Dehnung) | MPa | (DIN 53504) | 11,7 | 12,1 | 11,8 | 12,6 | 11,6 | 11,7 | 11,6 |
| Zugfestigkeit | MPa | (DIN 53504) | 39,4 | 49,7 | 40,6 | 28,2 | 44,9 | 43,7 | 43,7 |
| Reissdehnung | % | (DIN 53504) | 502 | 547 | 546 | 395 | 541 | 512 | 522 |
| Weiterreissfestigkeit | kN/m | (DIN 53515) | 110 | 112 | 105 | 98 | 110 | 109 | 109 |
| Stosselastizität | % | (DIN 53512) | 37 | 39 | 39 | 40 | 37 | 37 | 37 |
| | | | Verhalten der Giessmischung | | | | | | |
| | Giessmischung bleibt giessfähig (in Min.) | | 7 | 30 | 25 | 35 | 25 | 25 | 35 |
| | Elastomererstarrung (in Min.) | | 25 | 50 | 45 | 90 | 45 | 45 | 52 |

V = Vergleichsversuch

Tabelle 1 (Fortsetzung)

| | Dimension | Prüfmethode | Eigenschaften der Elastomere Beispiel-Nr. 8 (V) | 9 (V) | 10 (V) | 11 (V) | 12 (V) | 13 (V) | 14 (V) |
|---|---|---|---|---|---|---|---|---|---|
| Shore Härte A/D | | (DIN 53505) | 94/50 | – | – | – | – | 96/51 | 95/50 |
| 100% (Spannung bei 100%ig) | MPa | (DIN 53504) | 11,3 | – | – | – | – | 13,0 | 9,4 |
| Zugfestigkeit | MPa | (DIN 53504) | 43,2 | – | – | – | – | 37,5 | 24,8 |
| Reissdehnung | % | (DIN 53504) | 560 | – | – | – | – | 505 | 540 |
| Weiterreissfestigkeit | kN/m | (DIN 53515) | 111 | – | – | – | – | 93 | 95 |
| Stosselastizität | % | (DIN 53512) | 37 | – | – | – | – | 45 | 45 |
| | | | Verhalten der Giessmischung | | | | | | |
| | Giessmischung bleibt giessfähig (in Min.) | | 4,5 | 4,75 | 4 | 4,5 | 5,8 | 2,5 | 2,5 |
| | Elastomererstarrung (in Min.) | | 20 | 15 | 15 | 17 | 21 | 12 | 13 |

V = Vergleichsversuch

**Patentansprüche**

1. Verfahren zur Herstellung von massiven Polyurethan-Elastomeren durch Umsetzung von

a) 1,5-Diisocyanatonaphthalin oder überwiegend 1,5-Diisocyanatonaphthalin enthaltenden Gemischen aromatischer Diisocyanate,

b) mindestens zwei, gegenüber NCO-Gruppen reaktive Wasserstoffatome aufweisenden höhermolekularen Verbindungen der Molmasse 400 bis 10 000 oder NCO-Prepolymeren aus a) und b) und gegebenenfalls Anteilen von c),

c) Kettenverlängerungsmitteln oder Kettenverlängerungsmittelgemischen der Molmasse 62 bis 399,

d) Silikonen und gegebenenfalls

e) Katalysatoren und anderen, an sich bekannten Zusatzstoffen,

dadurch gekennzeichnet, dass man als Kettenverlängerungsmittel c) Diole der 1.4–3.6-Dianhydrohexit-Reihe, gegebenenfalls in Abmischung mit weiteren niedermolekularen Kettenverlängerungsmitteln, in Verbindung mit einem oder mehreren Polyoxyalkylen-polydialkylsiloxan-Copolymeren in Mengen von 0,05 bis 5 Gew.-%, bezogen auf das Polyurethan, einsetzt.

2. Verfahren nach Anspruch 1, dadurch gekennzeichnet, dass man Diole der 1.4–3.6-Dianhydrohexit-Reihe, gegebenenfalls in Abmischung mit niedermolekularen Diolen der Molmasse 62–250, in Gegenwart von 0,1 bis 1,5 Gew.-% eines oder mehrerer Polyoxyalkylen-poly(di)alkylsiloxan-Copolymere einsetzt.

3. Verfahren nach Ansprüchen 1 und 2, dadurch gekennzeichnet, dass man Polyoxyalkylen-poly-(di)alkylsiloxan-Copolymere mit einem Oxyalkylenetheranteil von 20 bis 90 Gew.-% und einem Poly(di)alkylsiloxan-Gehalt von 80 bis 10 Gew.-% einsetzt.

4. Verfahren nach Ansprüchen 1 bis 3, dadurch gekennzeichnet, dass man Polyoxyalkylen-poly-(di)alkylsiloxan-Copolymere mit einem Polyoxyalkylenether-Anteil von 40 bis 87,5 Gew.-% und einem Poly(di)alkylsiloxan-Gehalt von 60 bis 12,5 Gew.-% einsetzt.

5. Verfahren nach Ansprüchen 1 bis 4, dadurch gekennzeichnet, dass der Polyoxyalkylenether-Anteil zu 20 bis 80 Gew.-% aus Oxyethylenresten und die restlichen Oxyalkylengruppen aus Oxyalkylengruppen mit 3 bis 10 C-Atomen bestehen.

6. Verfahren nach Ansprüchen 1 bis 5, dadurch gekennzeichnet, dass die restlichen Oxyalkylenethergruppierungen Oxypropylen- oder Oxybutylenreste sind.

7. Verfahren nach Ansprüchen 1 bis 6, dadurch gekennzeichnet, dass man als Polyoxyalkylen-poly(di)alkylsiloxan-Copolymere Polyoxyalkylen-poly(di)methylsiloxan-Copolymere mit linearer, verzweigter oder kammartiger Struktur und einem Oxyalkylengehalt von 20 bis 90 Gew.-%, davon einem Gehalt von 20 bis 80 Gew.-% an Oxyethylengruppen, und einem Poly(di)methylsiloxan-Gehalt von 80 bis 10 Gew.-% an Poly(di)methylsiloxan-Gruppen einsetzt.

8. Verfahren nach Ansprüchen 1 bis 7, dadurch gekennzeichnet, dass man Diole der 1.4–3.6-Dianhydro-hexite-Reihe oder ihre Mischungen in Abmischung mit 1,4-Butandiol und/oder 2,3-Butandiol in Mengen unter 50 Mol-% an Butandiolen, bezogen auf gesamtes Kettenverlängerungsmittel, verwendet.

9. Verfahren nach Ansprüchen 1 bis 8, dadurch gekennzeichnet, dass man NCO-Prepolymere auf der Basis von Polyestern, gegebenenfalls 0,1 bis 6 Mol an niedermolekularen Diolen, bezogen auf 1 Mol Polyester, und überschüssigen Mengen 1,5-Diisocyanatonaphthalin verwendet, deren NCO-Gehalt zwischen 1 und 16 Gew.-% NCO beträgt.

10. Verfahren nach Ansprüchen 1 bis 9, dadurch gekennzeichnet, dass man die Polyoxyalkylen-poly(di)alkylsiloxan-Copolymeren als Zubereitung mit den erfindungsgemässen Kettenverlängerungsmitteln oder Kettenverlängerungsmittel-Gemischen und/oder als Zubereitung mit den NCO-Prepolymeren verwendet.

**Claims**

1. Process for the preparation of compact polyurethane elastomers by the reaction of

a) 1,5-diisocyanatonaphthalene or mixtures of aromatic diisocyanates predominantly containing 1,5-diisocyanatonaphthalene,

b) relatively high molecular weight compounds in the molecular weight range of from 400 to 10 000 containing at least two isocyanate reactive hydrogen atoms or isocyanate prepolymers of a) and b) and optionally a proportion of c),

c) chain lengthening agents or mixtures of chain lengthening agents having molecular weights of from 62 to 399,

d) silicones and optionally

e) catalysts and other known additives,

characterised in that diols of the 1,4–3,6-dianhydrohexitol series are used as chain lengthening agents c), optionally in admixture with other low molecular weight chain lengthening agents, in combination with one or more polyoxyalkylene-polydialkylsiloxane copolymers in quantities of from 0.5 to 5% by weight, based on the polyurethane.

2. Process according to Claim 1, characterised in that diols of the 1,4–3,6-dianhydro-hexitol series, optionally in admixture with a low molecular weight diols in the molecular weight range of from 62 to 250 are used in the presence of 0.1 to 1.5% by weight of one or more polyoxyalkylene-poly(di)alkylsiloxane copolymers.

3. Process according to Claims 1 and 2, characterised in that polyoxyalkylene-poly(di)alkylsiloxane copolymers having an oxyalkylene ether content of from 20 to 90% by weight and a poly(di)alkylsiloxane content of from 80 to 10% by weight are used.

4. Process according to Claims 1 to 3, characterised in that polyoxyalkylene-poly(di)alkylsiloxane copolymers having a polyoxyalkylene ether content of from 40 to 87.5% by weight and a poly(di)alkylsiloxane content of from 60 to 12.5% by weight are used.

5. Process according to Claims 1 to 4, characterised in that from 20 to 80% by weight of the polyoxyalkylene ether component consists of oxyethylene groups and the remaining oxyalkylene groups are oxyalkylene groups containing 3 to 10 carbon atoms.

6. Process according to Claims 1 to 5, characterised in that the remaining oxyalkylene ether groups are oxypropylene or oxybutylene groups.

7. Process according to Claims 1 to 6, characterised in that polyoxyalkylene-poly(di)methylsiloxane copolymers having a linear, branched or comb like structure and an oxyalkylene content of from 20 to 90% by weight, of which 20 to 80% by weight are oxyethylene groups, and a poly(di)methylsiloxane content of from 80 to 10% by weight of poly(di)methylsiloxane groups are used as polyoxyalkylene-poly(di)alkylsiloxane copolymers.

8. Process according to Claims 1 to 7, characterised in that diols of the 1,4–3,6-dianhydrohexitol series or mixtures thereof are used in admixture with 1,4-butane diol and/or 2,3-butane diol in quantities of less than 50 mol% of butane diols, based on the total quantity of chain lengthening agents.

9. Process according to Claims 1 to 8, characterised in that insocyanate prepolymers based on polyesters, optionally 0.1 to 6 mol of low molecular weight diols, based on 1 mol of polyester, and excess quantities of 1,5-diisocyanatonaphthalene having an isocyanate content of from 1 to 16% by weight NCO are used.

10. Process according to Claims 1 to 9, characterised in that the polyoxyalkylene-poly(di)alkylsiloxane copolymers are used as preparations with the chain lengthening agents or chain lengthening agent mixtures according to the invention and/or as preparations with the isocyanate prepolymers.

**Revendications**

1. Procédé de fabrication d'élastomères de polyuréthanes massifs par réaction

a) du 1,5-diisocyanatonaphtalène ou de mélanges de diisocyanates aromatiques contenant en prépondérance du 1,5-diisocyanatonaphtalène,

b) de composés à poids moléculaire élevé présentant au moins deux atomes d'hydrogène réactifs envers les NCO, d'une masse molaire de 400 à 10 000, ou de prépolymères à NCO se composant de a) et de b) et éventuellement de proportions de c),

c) d'agents d'allongement de chaîne ou de mélange d'agents d'allongement de chaîne de masse molaire 62 à 399,

d) de silicones et éventuellement

e) de catalyseurs et autres additifs connus en eux-mêmes,

caractérisé en ce qu'en tant qu'agents d'allongement de chaîne c) on utilise des diols de la série des 1.4–3.6-dianhydro-hexitols, éventuellement en mélange avec d'autres agents d'allongement de chaîne à poids moléculaire inférieur, en association avec un ou plusieurs copolymères polyoxyalcoylène-polydialcoylsiloxane en des quantités de 0,05 à 5% en poids par rapport au polyuréthane.

2. Procédé selon la revendication 1, caractérisé en ce qu'on utilise des diols de la série des 1.4–3.6-dianhydro-hexitols, éventuellement en mélange avec des diols à poids moléculaire inférieur de masse molaire 62–250, en présence de 0,1 à 1,5% en poids d'un ou plusieurs copolymères polyoxyalcoylène-poly(di)alcoylsiloxane.

3. Procédé selon les revendications 1 et 2, caractérisé en ce qu'on utilise des copolymères po-

lyoxyalcoylène-poly(di)alcoylsiloxane ayant une proportion de oxyalcoylène-éther de 20 à 90% en poids et une teneur en poly(di)alcoylsiloxane de 80 à 10% en poids.

4. Procédé selon les revendications 1 à 3, caractérisé en ce qu'on utilise des copolymères polyoxyalcoylène-poly(di)alcoylsiloxane ayant une proportion de polyoxyalcoylène-éther de 40 à 87,5% en poids et une teneur en poly(di)alcoylsiloxane de 60 à 12,5% en poids.

5. Procédé selon les revendications 1 à 4, caractérisé en ce que la proportion de polyoxyalcoylène-éther consiste en 20 à 80% en poids de radicaux oxyéthylène et les groupes oxyalcoylène restants se composant de groupes oxyalcoylène ayant 3 à 10 atomes de carbone.

6. Procédé selon les revendications 1 à 5, caractérisé en ce que les groupements oxyalcoylène restants sont des radicaux oxypropylène ou oxybutylène.

7. Procédé selon les revendications 1 à 6, caractérisé en ce qu'on utilise comme copolymères polyoxyalcoylène-poly(di)alcoylsiloxane des copolymères polyoxyalcoylène-poly(di)méthylsiloxane à structure linéaire, ramifiée ou en peigne, avec une teneur en oxyalcoylène de 20 à 90% en poids et dans celle-ci une teneur de 20 à 80% en poids en groupes oxyéthylène, ainsi qu'une teneur de poly(di)méthylsiloxane de 80 à 10% en poids en groupes poly(di)méthylsiloxane.

8. Procédé selon les revendications 1 à 7, caractérisé en ce qu'on utilise des diols de la série des 1.4–3.6-dianhydro-hexitols ou leurs mélanges en mélange avec du 1,4-butane diol et/ou du 2,3-butane diol en des quantités inférieures à 50 moles% de butane diols par rapport à l'agent d'allongement de chaîne pris dans son ensemble.

9. Procédé selon les revendications 1 à 8, caractérisé en ce qu'on utilise des prépolymères à NCO à base de polyesters, éventuellement 0,1 à 6 moles de diols à poids moléculaire inférieur par mole de polyester et des quantités excédentaires de 1,5-diisocyanatonaphtalène, dont la teneur en NCO est comprise entre 1 et 16% en poids de NCO.

10. Procédé selon les revendications 1 à 9, caractérisé en ce qu'on utilise les copolymères polyoxyalcoylène-poly(di)alcoylsiloxane à l'état de préparation avec les agents d'allongement de chaîne ou mélanges d'agents d'allongement de chaîne conformes à l'invention et/ou à l'état de préparation avec les prépolymères à NCO.